(19) Europäisches Patentamt
European Patent Office
Office européen des brevets

(11) **EP 2 204 409 A1**

(12) **EUROPEAN PATENT APPLICATION**
published in accordance with Art. 153(4) EPC

(43) Date of publication:
**07.07.2010 Bulletin 2010/27**

(51) Int Cl.:
**C08L 23/04** (2006.01)   **C08L 23/14** (2006.01)
**B32B 27/32** (2006.01)

(21) Application number: **07823069.5**

(22) Date of filing: **19.10.2007**

(86) International application number:
**PCT/ES2007/070175**

(87) International publication number:
**WO 2009/050310 (23.04.2009 Gazette 2009/17)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Dow Global Technologies Inc.**
**Midland, Michigan 48674 (US)**

(72) Inventors:
• **KUPSCH, Eva-Maria**
  **E-08880 Cubelles (ES)**

• **KRONAWITTLEITHNER, Kurt**
  **CH-8810 Horgen (CH)**
• **ARROYO VILLAN, Maria I.**
  **E-43007 Tarragona (ES)**

(74) Representative: **Hayes, Adrian Chetwynd**
**Boult Wade Tennant**
**Verulam Gardens**
**70 Gray's Inn Road**
**London WC1X 8BT (GB)**

(54) **POLYOLEFIN BASED PEELABLE SEALS**

(57) The invention relates to a polyolefin-based heat sealable and peelable seal having improved haze values. The peelable seals comprise from about 45 to about 55 percent by weight of a propylene based plastomer or elastomer and from about 45 to about 55 percent by weight of low density polyethylene. Such peelable seals exhibit total haze values of less than about 8 percent, based on a film thickness of 50 microns.

Fig.1

EP 2 204 409 A1

**Description**

FIELD OF THE INVENTION

The invention relates to a polyolefin-based heat sealable and peelable seal having good optical characteristics. The invention also relates to methods of making and using the heat sealable, peelable seal.

BACKGROUND AND SUMMARY OF THE INVENTION

Heat sealable and peelable films (also referred to herein as "peelable seals") are employed on a large scale for temporarily closing containers that include, for example, food products or medical devices. During use, a consumer tears away the peelable film. To gain consumer acceptance, a number of characteristics associated with a heat sealable and peelable film are desired. For example, the film should provide a leak-proof closure of the container or bag. To seal a bag, heat sealing is commonly used. Various apparatus have been constructed for the purpose of forming bags while simultaneously filling the bags with the desired contents. These apparatus are commonly known as vertical form- fill-and-seal and horizontal form-fill-and-seal machines.

These machines typically have forming collars or bars that shape a flat piece of film into a tubular shape of a bag. Hot metal sealing jaws are moved from an open position to a closed position, contacting the film in order to seal it into a bag shape. During the sealing process, the outer layer of the film comes into direct contact with the hot metal surface of the sealing jaws. Heat is thus transferred through the outer layer of the film to melt and fuse the inner sealant layer to form a seal. Generally, the outer layer has a higher melting temperature than the inner sealant layer. As such, while the inner sealant layer is melted to form a seal, the outer layer of the film does not melt and is not stuck to the sealing jaws. After the sealing jaws reopen, the film is cooled to room temperature.

Before the inner sealant layer is cooled to room temperature, it should be able to maintain its seal integrity. The ability of an adhesive or sealant layer to resist creep of the seal while it is still in a warm or molten state is generally referred to as "hot tack." To form a good seal, the hot tack of the sealable and peelable film should be adequate.

Besides adequate hot tack, it is also desirable to have a low heat seal initiation temperature which helps to ensure fast packaging line speeds and a broad sealing window which could accommodate variability in process conditions, such as pressure and temperature. A broad sealing window also enables high speed packaging of heat sensitive products, as well as, provides a degree of forgiveness for changes in packaging or filling speeds.

In addition to the "sealable" characteristic of a sealable and peelable film, it should also have a desired "peelable" characteristic needed to provide an easily openable seal on a package or bag. Peelability generally refers to the ability to separate two materials or substrates in the course of opening a package without compromising the integrity of either of the two. The force required to pull a seal apart is called "seal strength" or "heat seal strength" which can be measured in accordance with ASTM F88-94. The desired seal strength varies according to specific end user applications. For flexible packaging applications, such as cereal liners, snack food packages, cracker tubes and cake mix liners, the seal strength desired is generally in the range of about 1-9 pounds per inch. For example, for easy-open cereal box liners, a seal strength in the range of about 2-3 pounds per inch is commonly specified, although specific targets vary according to individual manufactures requirements. In addition to flexible packaging application, a sealable and peelable film can also be used in rigid package applications, such as lids for convenience items (e.g., snack food such as puddings) and medical devices. Typical rigid packages have a seal strength of about 1-5 pounds per inch. The seal layer can be on the lid or on the container or both.

Additional desired characteristics for a heat sealable and peelable film include a low coefficient of friction and good abuse resistance. A low coefficient of friction ensures that the sealant layer can be processed smoothly and efficiently on fabrication and packaging equipment and is particularly important for vertical form-fill-and-seal packaging. Good abuse resistance and toughness is desired, for example, in cereal box liners to withstand tears and punctures from irregularly-shaped, rigid cereals. Additional characteristics include taste and odor performance and barrier or transmission properties.

Many peelable seals are re-sealable meaning that once the packaging has been unsealed they can be resealed. In some applications, it is important to be able to identify when the package has been unsealed as, for example, it may indicate when a package has been the subject of tampering.

Heat sealable and peelable films are generally made from one or more polymeric resins. The resulting characteristics of a heat sealable and peelable film depend largely upon the type of the resins used to form the film. For example, ethylene vinyl acetate (EVA) and ethylene methyl acrylate (EMA) copolymers provide excellent heat sealing properties. However, the seals produced with these copolymers are such that separation usually cannot be achieved without damage to the film. To alleviate this problem, polybutylene is mixed with an EVA polymer to produce a heat sealable and peelable film. Although the peelability of the film is improved, the heat sealable and peelable film has some unpleasant odor due to the presence of EVA. In addition to using polybutylene, some ionomers, such as SURLYN®, is mixed with EVA to produce a heat sealable and peelable film. While the film is peelable, it causes stringiness or fiber tear upon separation of the film. Moreover, ionomers are generally expensive and may have some odor as well.

Additionally, Typical EVA-Polybutylene based peelable seal systems "age up" in seal strength. The seal strength increases as time elapses after seal formation. This is seen as a disadvantage of these systems because seals that are secure at the time the package is formed increase in strength prior to reaching the consumer, making the packages more difficult to open.

US Pat No. 6,590,034 describes peelable seals made from a mixture of two immiscible polymers which form a continuous phase and a discontinuous phase wherein the absolute value of the shear viscosity differential of the two polymers is less than 100%. Although many potential materials are covered, this reference focuses on the use of homopolymer polypropylene as the discontinuous phase.

Although a number of resins systems have been employed to make a heat sealable and peelable film, there continues to exist a need for an improved cost-effective heat sealable and peelable film with desired seal strength during processing and transportation as well as during package opening by the end consumer. It is desirable that the resin system used to produce the heat sealable and peelable film has a relatively lower seal initiation temperature and a relatively broad heat sealing window. It is also desirable that the heat sealable and peelable film is relatively age-resistant and has a relatively lower coefficient of friction and good abuse resistance and toughness.

WO2007/044159 discloses peelable seals meeting many of these goals. This reference teaches blends of from about 5 to about 98 percent by weight of propylene based elastomers or plastomers with a particular second polymer from a group preferably consisting of polyethylene and styrenic polymers. However, for many applications, it is also desired that peelable seals have better optics, particularly in regards to low amounts of total haze observed.

It has been discovered that a synergistic effect of low total haze is observed in peelable seals comprising propylene based elastomers or plastomers and low density polyethylene in a roughly 50:50 blend.

BRIEF DESCRIPTION OF DRAWINGS

Fig. 1 is a bar graph showing the haze of 50 micron blown films that are varying in the ratio of resin A to resin B as described in Example 1.

Fig. 2 is a graph showing heat seal strengths of a 50-50 blend of a PBPE/LDPE over a range of sealing temperatures to a variety of materials as described in Example 2

DETAILED DESCRIPTION OF THE INVENTION

The term "polymer", as used herein, refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers.

The term "low density polyethylene" may also be referred to as "LDPE", "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example US 4,599,392, herein incorporated by reference).

The term molecular weight distribution or "MWD" is defined as the ratio of weight average molecular weight to number average molecular weight ($M_w/M_n$). $M_w$ and $M_n$ are determined according to methods known in the art using conventional GPC.

The ratio Mw(absolute)/Mw(GPC) is defined wherein Mw(absolute) is the weight average molecular weight derived from the light scattering area at low angle (such as 15 degrees) and injected mass of polymer and the Mw(GPC) is the weight average molecular weight obtained from GPC calibration. The light scatter detector is calibrated to yield the equivalent weight average molecular weight as the GPC instrument for a linear polyethylene homopolymer standard such as NBS 1475.

"Melt strength" which is also referred to in the relevant art as "melt tension" is defined and quantified herein to mean the stress or force (as applied by a wind-up drum equipped with a strain cell) required to draw a molten extrudate at a haul-off velocity at which the melt strength plateaus prior to breakage rate above its melting point as it passes through the die of a standard plastometer such as the one described in ASTM D1238-E. Melt strength values, which are reported herein in centi-Newtons (cN), are determined using a Gottfert Rheotens at 190°C.

The present invention relates to a blend of at least two components, which blends are particularly well suited for use as a peelable seal.

The first component in the blends of the present invention is a propylene-based plastomer or elastomer or "PBPE". These materials comprise at least one copolymer with at least about 50 weight percent of units derived from propylene and at least about 5 weight percent of units derived from a comonomer other than propylene, preferably ethylene. Suitable propylene based elastomers and/or plastomers are taught in WO2006/115839, WO03/040442, and WO/2007/024447, each of which is hereby incorporated by reference in its entirety.

Of particular interest for use in the present invention are reactor grade PBPEs having MWD less than 3.5. It is intended that the term "reactor grade" is as defined in US Patent 6,010,588 and in general refers to a polyolefin resin whose molecular weight distribution (MWD) or polydispersity has not been substantially altered after polymerization. The preferred PBPE will have a heat of fusion (as determined using the DSC method described in US application 60/709688) less than about 90 Joules/gm, preferably less than about 70 Joules/gm, more preferably less than about 50 Joules/gm. When ethylene is used as a comonomer, the PBPE has from about 3 to about 15 percent of ethylene, or from about 5 to about 14 percent of ethylene, or about 7 to 12 percent ethylene, by weight of the propylene based elastomer or plastomer.

Although the remaining units of the propylene copolymer are derived from at least one comonomer such as ethylene, a $C_{4-20}$ $\alpha$-olefin, a $C_{4-20}$ diene, a styrenic compound and the like, preferably the comonomer is at least one of ethylene and a $C_{4-12}$ $\alpha$-olefin such as 1-hexene or 1-octene. Preferably, the remaining units of the copolymer are derived only from ethylene.

The amount of comonomer other than ethylene in the propylene based elastomer or plastomer is a function of, at least in part, the comonomer and the desired heat of fusion of the copolymer. If the comonomer is ethylene, then typically the comonomer-derived units comprise not in excess of about 15 wt % of the copolymer. The minimum amount of ethylene-derived units is typically at least about 3, preferably at least about 5 and more preferably at least about 9, wt % based upon the weight of the copolymer. If the polymer comprises at least one other comonomer other than ethylene, then the preferred composition would have a heat of fusion approximately in the range of a propylene-ethylene copolymer with about 3 to 20 wt.% ethylene. Though not intending to be bound by theory, it is thought that attaining approximately similar crystallinity and crystal morphology is beneficial to achieving similar functionality as a peelable seal.

The propylene based plastomer or elastomer of this invention can be made by any process, and includes copolymers made by Ziegler-Natta, CGC (Constrained Geometry Catalyst), metallocene, and nonmetallocene, metal-centered, heteroaryl ligand catalysis. These copolymers include random, block and graft copolymers although preferably the copolymers are of a random configuration. Exemplary propylene copolymers include Exxon-Mobil VISTAMAXX polymer, and VERSIFY propylene/ethylene elastomers and plastomers by The Dow Chemical Company.

The density of the propylene based elastomers or plastomers of this invention is typically at least about 0.850, can be at least about 0.860 and can also be at least about 0.865 grams per cubic centimeter ($g/cm^3$) as measured by ASTM D-792. Preferably the density is less than about 0.89 g/cc. In general the lower the density, the lower the haze, but the use of a lower density material may take the material out of the "peelable" seal range, and so the properties must be balanced.

The weight average molecular weight (Mw) of the propylene based elastomers or plastomers of this invention can vary widely, but typically it is between about 10,000 and 1,000,000 (with the understanding that the only limit on the minimum or the maximum $M_w$ is that set by practical considerations). For homopolymers and copolymers used in the manufacture of peelable seals, preferably the minimum Mw is about 20,000, more preferably about 25,000. In general for low haze it is thought to be desirable to match the Mw of the propylene based elastomer or plastomer to the Mw of the LDPE, in the sense that when lower Mw LDPE is used, lower Mw PBPEs should also be used.

The polydispersity of the propylene based elastomers or plastomers of this invention is typically between about 2 and about 5. In general for low haze, it is preferred to use material with a narrow polydispersity. "Narrow polydispersity", "narrow molecular weight distribution", "narrow MWD" and similar terms mean a ratio ($M_w/M_n$) of weight average molecular weight ($M_w$) to number average molecular weight ($M_n$) of less than about 3.5, can be less than about 3.0, can also be less than about 2.8, can also be less than about 2.5.

The PBPEs for use in the present invention ideally have an MFR of from 0.5 to 2000 g/10min, preferably from about 1 to 1000, more preferably from about 2 to 500, still more preferably from about 2 to 40. The particular MFR selected will depend in part on the intended fabrication methods such as blown film, extrusion coating, sheet extrusion, injection molding or cast film processes. MFR for copolymers of propylene and ethylene and/or one or more $C_4$-$C_{20}$ $\alpha$-olefins is measured according to ASTM D-1238, condition L (2.16 kg, 230 degrees C).

MFRs greater than about 250 were estimated according to the following correlation:

$$MFR = 9 \times 10^{18} \, Mw^{-3.3584}$$

Mw (grams per mole) was measured using gel permeation chromatography.

The overall blends for use in the present invention will alsocomprise a low density polyethylene(LDPE). The preferred LDPE for use in the present invention has a Melt Index ($I_2$) (determined by ASTM D1238, condition 190°C/ 2.16kg), of from about 0.2 to about 100g/10 min. More preferably the melt index is greater than about 0.2, most preferably more than 0.5g/10min. The melt index is preferably less than about 50, more preferably less than about 20, and most preferably less than about 10g/10 min. The preferred LDPE will also have a density (as determined in accordance with ASTM D792) in the range of 0.915 to 0.930 g/cc, preferably 0.915 to 0.925 g/cc. In general the use of lower density LDPE materials results in seals exhibiting lower haze, but as with the PBPE component, this trend must be balanced against other properties so as to achieve a good overall balance of properties.

Such preferred LDPE can be made in a tubular reactor as is generally known in the art.

The second component of the present invention may also include LDPE/LDPE blends, for example, blends in which one of the LDPE resins has a relatively higher melt index and the other has a lower melt index and is more highly branched, although for low haze, highly branched materials such as those typically produced in an autoclave reactor are not desired. The component with the higher melt index can be obtained from a tubular reactor, and a lower MI, higher branched, component of the blend may be added in a separate extrusion step or using a parallel tubular/autoclave reactor in combination with special methods to control the melt index of each reactor, such as recovery of telomer in the recycle stream or adding fresh ethylene to the autoclave (AC) reactor, or any other methods known in the art.

While both high pressure ethylene homopolymers and copolymers are believed to be useful in the invention, homopolymer polyethylene is generally preferred.

It has been discovered that optimum results in terms of the resulting total haze is obtained when the ratio of PBPE to LDPE is approximately 50:50. Accordingly, the PBPE will ideally comprise at least about 45 percent by weight of the blend used to make the peelable seal, with at least 48 percent or about 50 percent being preferred for certain applications. The PBPE should ideally comprise no more than about 55 percent by weight of the blend used to make the peelable seal, with no more than52 percent being preferred for certain applications. Likewise, the LDPE will ideally comprise at least about 45 percent by weight of the blend used to make the peelable seal, with at least 48 percent or about 50 percent being preferred for certain applications. The LDPE should ideally comprise no more than about 55 percent by weight of the blend used to make the peelable seal, with no more than 52 percent being preferred for certain applications. In case low heat seal initiation temperature, and/or high hot tack strength is desired, it may be preferred to have blends comprising lower amounts of LDPE, such asless than about 50%, or even less than 47%.

The seals of the present invention can be made by any process such as blown film, sheet extrusion, injection molding, cast film, or extrusion coating processes. The peelable seal layer can be made in any desired thickness, for example from 1 micron to 3 mm. The sealant layer can be used as a monolayer, but more typically will be one layer of a multilayer structure, for example a 10 micron sealant layer with a 30 micron supporting layer.

When the sealant layer (particularly a sealant layer comprising a majority of PBPE) is coextruded on a substrate which is PP based then the whole structure will be recyclable.

Peelable seals made from the blends of the present invention will have an aged seal strength of about 1.5 to 10 N/15mm, preferably 2.0 to 8 N/15 mm, as determined using a Kopp heat sealer using a 0.5sec sealing time and 0.5 N/mm$^2$ seal bar pressure. Seal strength is measured after at least 24 hour ageing on 15 mm wide samples separated at 100 mm/min in machine direction pulled by a Lloyds tensile tester. It should be understood by one of ordinary skill in the art that the seal strength may advantageously be somewhat less for flexible packaging and somewhat higher for rigid packaging. The peelable seals of the present invention will have a heat seal initiation temperature of less than 140° C, preferably less than 130° C, more preferably less than 125° C. The heat seal initiation temperature is defined as the minimum temperature at which an aged seal strength of 1.0 N/ 15mm is obtained using the Kopp heat sealer and Lloyds tensile tester as described above.

"Haze" of the resulting seals refers to the total haze (that is internal haze plus external haze) and is determined according to ISO 14782. As is known in the art the total haze value will depend on the thicknes of the fim being measured. Thus for purposes of this application the reported "equivalent" haze values will be based on a film or seal thickness of 50 microns. A film or seal having a greater thickness than 50 microns will have an observed total haze somewhat higher than its equivalent haze, whereas a film or seal which is less than 50 microns will have an observed haze somewhat less than its equivalent haze. The seals of the present invention should have a haze value of 8% or less, more preferably 6% or less, still more preferably 5% or less.

It should also be understood that the composition of the present invention may also contain various additives as is generally known in the art. Examples of such additives include antioxidants, ultraviolet light stabilizers, thermal stabilizers, slip agents, antiblock, pigments or colorants, processing aids (such as fluoropolymers), crosslinking catalysts, flame retardants, fillers, foaming agents, etc.

The peelable seals of the present invention can be sealed against any conceivable surface. In particular it is contemplated that the peelable seals of the present invention can be sealed to various polylypropylene materials (including homopolymer polypropylene, random copolylmer polypropylene, impact copolymer polypropylene, propylene based plastomer or elastomer etc), various polyethylene materials (including homopolymer and copolymer materials such as high density polyethylene, low density polyethylene, linear low density polyethylene "LLDPE" (including linear and substantially linear LLDPE having a narrow molecular weight distributuion, such as those prepared using metallocene catalysts), ultra low density polyethylene, etc), or to itself.

The following Examples further illustrate the present invention.

EXAMPLES:

A description of all of the resins used in the Examples is presented in Table 1. The PBPE for these Examples was prepared according to the general teachings of WO2006/115839.

Table 1

| Resin | Description | Comonomer | Melt index* (g/10 min) | Density | Melt Index** (g/10 min) |
|---|---|---|---|---|---|
| A | High pressure LDPE | none | 2.0 | 0.925 | |
| B | PBPE | 9 percent ethylene | | 0.876 | 2 |
| C | High pressure LDPE | none | 0.8 | 0.924 | |
| D | Homopolymer PP | none | | 0.9 | 3.2 |
| E | Random PP | 4.1 percent ethylene | | 0.9 | 1.75 |
| * determined using ASTM D-1238 (2.16kg, 190°C) ** determined using ASTM D-1238 (2.16 kg, 230°C) | | | | | |

Example 1

A series of blown film trials is prepared and the haze measured. The blown film line line used has a die with a diameter of 60 mm. The die gap is 1.2 mm and the blow up ratio is 1:2.5. The standard melt temperature was between 205°C and 210°C. All films had a thickness of about 50 micro meter.
The haze of three different films differing in the ratio of resin A with resin B was measured according to ISO 14782.

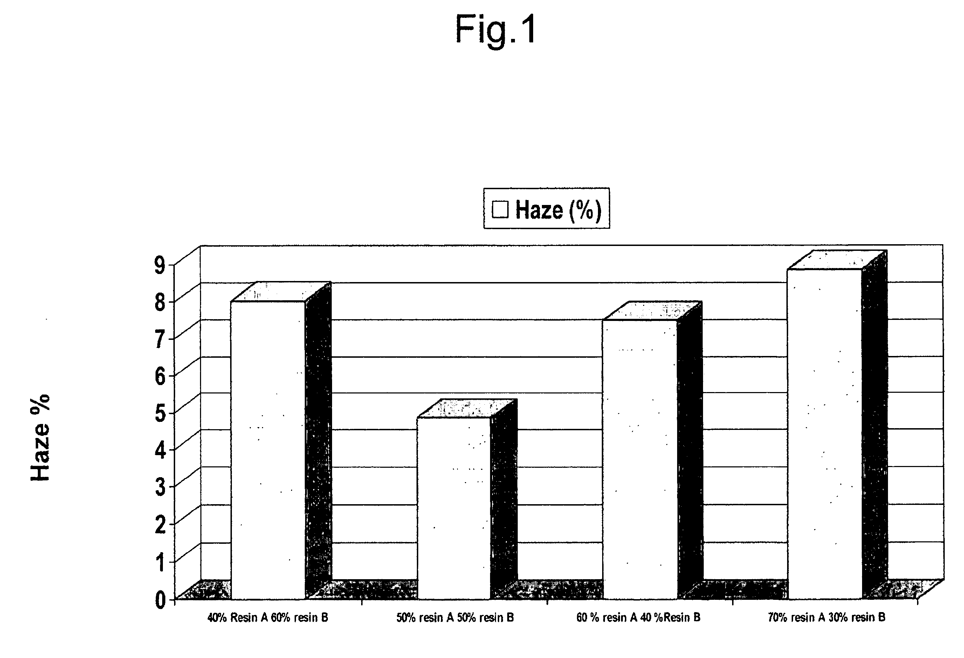

Fig 1 shows that the haze of the film made of a blend/compound of 50% resin A with 50% resin B is with < 5% significantly lower than expected when comparing it to the haze of 50 micron films made of blends/ compounds of 40% resin A and 60% with resin B with a haze of 8 % as well as 60% resin A and 40% resin B with a haze of 7.5 % and 70 % resin A with 30% of resin B with a haze of 8.9 %.

Example 2:

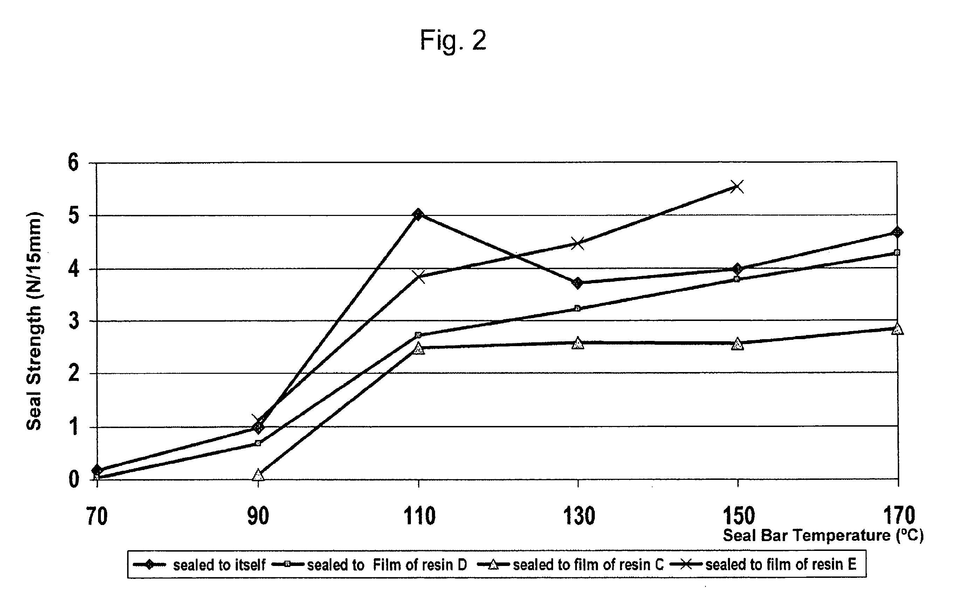

The seal strength of the 50 micron film of a blend/compound of 50% resin A and 50 % resin B is measured to the film itself, and to a 50 micron blown film of resin C, D and E made in the same way as described for example 1. Figure 2 shows that the seal curves of the 50 micron film of a blend/compound of 50 % resin A and 50% resin B shows a seal strength between 2N/ 15 mm and 6 N/ 15 mm in the seal bar temperature range of 110 °C and 170 °C when sealed to itself, a 50 micron film made of resin C, and a 50 micron film made of resin D. Figure 2 shows also that the seal curves of the 50 micron film of a blend/compound of 50 % resin A and 50% resin B shows a seal strength between 2N/ 15 mm and 6 N/ 15 mm in the seal bar temperature range of 110 °C and 150 °C when sealed to a 50 micron film made of resin E.

**Claims**

1.  A peelable seal layer comprising:

    a. from about 45 to about 55 percent by weight of a propylene based plastomer or elastomer ;
    b. from about 45 to about 55 percent by weight of a low density polyethylene wherein said peelable seal is **characterized by** having an equivalent total haze value less than 8%.

2.  The peelable seal of Claim 1 wherein the propylene based elastomer or plastomer contains from about 5% to about 15% by weight of the propylene based elastomer or plastomer of units derived from ethylene.

3. The peelable seal of Claim 1 wherein the propylene based elastomer or plastomer has a heat of fusion less than 90 J/gm.

4. The peelable seal of Claim 1 wherein the propylene based elastomer or plastomer has a heat of fusion less than 70 J/gm.

5. The peelable seal of Claim 1 wherein the propylene based plastomer or elastomer comprises from 48 to 52 percent of the peelable seal and the low density polyethylene comprises 48 to 52 percent of the peelable seal.

6. The peelable seal of Claim 1 wherein the propylene based plastomer or elastomer and the low density polyethylene are in a 1 to 1 ratio.

7. The composition of Claim 1 further comprising one or more additives from a group comprising antioxidants, ultraviolet light stabilizers, thermal stabilizers, slip agents, antiblock, pigments or colorants, processing aids (such as fluoropolymers), crosslinking catalysts, flame retardants, fillers and foaming agents.

8. The peelable seal of claim 1 wherein the seal has a seal strength in the range of 1.0 to 10 N/15mm.

9. The peelable seal of claim 1 wherein the seal has a seal strength in the range of 1.25 to 9.N/15mm.

10. The peelable seal of claim 1 wherein the seal has a seal strength in the range of 1.5 to 8 N/15mm.

11. The peelable seal of claim 1 wherein the equivalent total haze value is less than 6%.

12. The peelable seal of claim 1 wherein the equivalent total haze value is less than 5%.

13. The peelable seal of claim 1 wherein the seal is sealed to a polyethylene homopolymer or copolymer.

14. The peelable seal of claim 1 wherein the seal is sealed to homopolymer polypropylene, random copolylmer polypropylene, impact copolymer polypropylene, or a propylene based plastomer or elastomer.

15. The peelable seal of claim 1 wherein the seal is sealed to itself.

# Fig.1

EP 2 204 409 A1

Fig. 2

EP 2 204 409 A1

## INTERNATIONAL SEARCH REPORT

| International application No |
|---|
| PCT/ES2007/070175 |

**A. CLASSIFICATION OF SUBJECT MATTER**
INV. C08L23/04 C08L23/14 B32B27/32

According to International Patent Classification (IPC) or to both national classification and IPC

**B. FIELDS SEARCHED**

Minimum documentation searched (classification system followed by classification symbols)
C08L B32B

Documentation searched other than minimum documentation to the extent that such documents are included in the fields searched

Electronic data base consulted during the international search (name of data base and, where practical, search terms used)
EPO-Internal, WPI Data

**C. DOCUMENTS CONSIDERED TO BE RELEVANT**

| Category* | Citation of document, with indication, where appropriate, of the relevant passages | Relevant to claim No. |
|---|---|---|
| X | WO 2007/044159 A (DOW GLOBAL TECHNOLOGIES INC [US]; GIBBONS JULIE W [US]; WILLIAMS ALVED) 19 April 2007 (2007-04-19) cited in the application page 6, lines 5-7; claims 1,2,4-7,9,11,12,16,18; figure 2; table 1 page 7, lines 25-32 page 9, line 3 | 1-15 |
| A | US 2002/150781 A1 (WANIC JEFFREY A [US] ET AL) 17 October 2002 (2002-10-17) the whole document | 1 |
| A | & US 6 590 034 B1 (JEFFREY A. WANIC) 8 July 2003 (2003-07-08) cited in the application the whole document | 1 |

☐ Further documents are listed in the continuation of Box C.

☒ See patent family annex.

* Special categories of cited documents :

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art.

"&" document member of the same patent family

| Date of the actual completion of the international search | Date of mailing of the international search report |
|---|---|
| 15 January 2008 | 21/01/2008 |

| Name and mailing address of the ISA/ European Patent Office, P.B. 5818 Patentlaan 2 NL – 2280 HV Rijswijk Tel. (+31–70) 340–2040, Tx. 31 651 epo nl, Fax: (+31–70) 340–3016 | Authorized officer Knutzen-Mies, Karen |
|---|---|

Form PCT/ISA/210 (second sheet) (April 2005)

## INTERNATIONAL SEARCH REPORT
Information on patent family members

| | International application No |
|---|---|
| | PCT/ES2007/070175 |

| Patent document cited in search report | | Publication date | Patent family member(s) | Publication date |
|---|---|---|---|---|
| WO 2007044159 | A | 19-04-2007 | NONE | |
| US 2002150781 | A1 | 17-10-2002 | NONE | |
| US 6590034 | B1 | | NONE | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6590034 B
- WO 2007044159 A
- US 4599392 A
- WO 2006115839 A
- WO 03040442 A
- WO 2007024447 A
- US 6010588 A
- US 60709688 B